Europäisches Patentamt

European Patent Office

Office européen des brevets

(19)

(11) Veröffentlichungsnummer: **0 087 406**
**B1**

(12) # EUROPÄISCHE PATENTSCHRIFT

(45) Veröffentlichungstag der Patentschrift:
**14.01.87**

(51) Int. Cl.⁴: **B 23 K 35/30,** B 23 K 9/04

(21) Anmeldenummer: **83890020.7**

(22) Anmeldetag: **15.02.83**

(54) **Im wesentlichen kobalt- und karbidfreier Zusatzwerkstoff für das Auftragschweissen.**

(30) Priorität. **19.02.82 AT 637/82**

(43) Veröffentlichungstag der Anmeldung:
**31.08.83 Patentblatt 83/35**

(45) Bekanntmachung des Hinweises auf die Patenterteilung:
**14.01.87 Patentblatt 87/3**

(84) Benannte Vertragsstaaten:
**BE DE FR GB IT NL SE**

(56) Entgegenhaltungen:
**DE-B-1 259 683**
**FR-A-1 588 301**
**FR-A-2 072 433**
**FR-A-2 285 956**
**GB-A-1 275 007**

(73) Patentinhaber: **VEREINIGTE EDELSTAHLWERKE AKTIENGESELLSCHAFT (VEW), Elisabethstrasse 12, A-1010 Wien (AT)**

(72) Erfinder: **Schabereiter, Heinz, Hugo- Wolf- Strasse 4, A-8605 Kapfenberg (AT)**
Erfinder: **Tösch, Josef, Dr. Karl Renner- Strasse 4, A-8600 Bruck/Mur (AT)**

(74) Vertreter: **Widtmann, Georg, Dr., Vereinigte Edelstahlwerke Aktiengesellschaft (VEW) Elisabethstrasse 12, A-1010 Wien (AT)**

## Beschreibung

Die Erfindung betrifft einen im wesentlichen kobalt- und karbidfreien Zusatzwerkstoff für das Auftragschweißen zur Erzielung eines Schweißgutes mit hoher Abriebfestigkeit sowie hoher Korrosions- und IK-Beständigkeit im nicht wärmebehandelten Zustand, wobei "karbidfrei", beinhaltet, daß der Werkstoff soweit technisch realisierbar keine Karbide aufweist.

Bisher wurden für die Herstellung von Auftragschweis Bungen, die einem hohen Reibungsverschleiß standhalten und auch eine hohe Korrosionsbeständigkeit aufweisen müssen, vorwiegend Kobalt-Basis-Legierungen eingesetzt.

Aus der DE-PS 24 46 517 ist auch ein karbidfreier Schweißzusatzwerkstoff für das Auftragschweißen bekannt geworden, der aus einer 25 bis 50 % Cr, 1 bis 5 % Si und 0,5 bis 3 % B enthaltenden Nickellegierung besteht und bei dem sich der Chromanteil in einem bestimmten Verhältnis zum Borgehalt befinden soll.

Für beide Arten dieser Schweißzusatzwerkstoffe gibt es Anwendungsfälle, für die sie kaum oder gar nicht in Betracht kommen, so etwa für die erstgenannte Gruppe bei Bauteilen, die in nuklearen Dampferzeugersystemen eingesetzt werder, weil die auf Grund des Kobaltgehaltes aufwretende hohe Strahlenbelastung die Wartungs- und Reparaturarbeiten ungemein erschwert.

Überraschenderweise wurde gefunden, daß es gelingt, auf der Basis einer Chrom-NickelStahllegierung einen in vielen Fällen als Ersatz der Kobalt-Basis-Scdhweißauftragslegierungen gesigneten Schweißzusatzwerkstoff zu schaffen. Das Erfindungskennzeichen dieses in Form einer ummantelten Stabelektrode oder eines Fülldrahtes bzw. -bandes zum Einsatz kommenden Zusatzerkstoffes besteht darin, daß er — bezogen auf die metallischen Anteile im Kerndraht und der Umhüllung bzw. Füllung — in Gewichtsprozenten max. 0,15 % C, 3,0 bis 10,0 % Si, 3,0 bis 12,0 % Mn, 22,0 bis 30,0 % Cr, 7,0 bis 16,0 % Ni, Rest Fe und unvermeidliche Verunreinigungen enthält.

Gemäß einer bevorzugten Ausführungsform sind insbesondere die folgenden in Gewichtsprozenten angegebenen Mengen bzw. Mengenbereiche vorgesehen:
max. 0,15 % C, 4,5 bis 8,5 % Si, 5,0 bis 12,0 % Mn, 22,0 bis 27,0 % Cr, 7,0 bis 14,0 % Ni, Rest Fe und unvermeidliche Verunreinigungen.

Bezüglich der ungewollt vorhandenen Verunreinigungen sei bemerkt, daß darunter in manchen Fällen — abhängig von der Beschaffenheit der eingesetzten Rohstoffe — auch eine minimale Kobaltmenge zu verstehen ist, doch versteht es sich von selbst, daß man sich bemüht, eine derartige Verunreinigung auf das geringstmögliche Ausmaß, jedenfalls aber auf weniger als 0,25 % Co zu beschränken.

Das Schweißgut der erfindungsgemäßen, vorzugsweise basisch umhüllten Stabelektroden bzw. der entsprechend aufgebauten Fülldrähte bzw. -bänder weist eine ferritisch-austenitische Gefügestruktur mit 40 bis 70 % Ferrit auf, wobei die guten tribologischen Eigenschaften dem hohen Ferritanteil und dem Siliziumgehalt zugeschrieben werden können. Die Härte des Auftragschweißgutes kann bei der bevorzugten Ausführungsform des Zusatzwerkstoffes mit etwa 300 HV 10 angenommen werden.

Die Erfindung wird nachfolgend an Hand der Ausführungsbeispiele näher erläutert.

### Beispiel 1:

Mit einem Kerndraht bestehend aus 0,10 % C, 4,6 % Si, 1,01 % Mn, 19,5 % Cr, 12, 0 % Ni, Rest Fe und unvermeidliche Verunreinigungen und einer im Trockenzustand der Zusammensetzung (in Gew.-%):

| | |
|---|---|
| $CaCO_3$ | 22 |
| $CaF_2$ | 18 |
| Mn-Metall | 18 |
| Cr-Metall | 20 |
| FeSi (45 % Si) | 11 |
| Silikatisches Bindemittel + Preßhilfsmittel | 11 |

entsprechenden Hüllenmasse wurden mittelstark umhüllte Stabelektroden gefertigt und damit eine dreilagige Auftragschweißung unter Beachtung einer Vorwärm- bzw. Zwischenlagentemperatur von mehr als 250°C vorgenommen. Die gesondert (nach DIN 8556) ermittelte Schweißgutzusammensetzung betrug: 0,12 % C, 5,7 % Si, 5,6 % Mn, 22,3 % Cr, 9,1 % Ni, Rest im wesentlichen Fe. Die Härte der Schweißauftragung wurde mit 320 HV 10 bestimmt. Eine vergleichende Untersuchung der Verschleißeigenschaften mit einem Kobalt-Basis-Zusatzwerkstoff erbrachte das überraschende Ergebnis, daß die bei RT und in einer Hochtemperatur-Reibversuchs-anlage bei 280°C vorgenommene Prüfung des Abriebes bei gegenseitiger oszillierender Reibbewegung planparallel geschliffener Schweißgut-Oberflächen auch bei unterschiedlichen Belastungswerten im wässerigen Medium (demineralisiertes Wasser) annähernd gleich gute Ergebnisse erbrachte wie das Schweißgut aus der Kobaltlegierung (65 % Co, 25 % Cr, 4,5 % W, 1,2 % C, Rest im wesentlichen Fe). Eine nach den für Schweißzusatzwerkstoffe geltenden Anweisungen der DIN 50914 vorgenommene Prüfung auf IK-Beständigkeit durch 15-stündiges Kochen von aus vierlagiger Auftragschweißung entnommenen Schweißproben in schwefelsaurer Kupfersulfatlösung und metallographische Untersuchung der behandelten Proben des reinen Schweißgutes zeigte keinen Korngrenzenangriff.

### Beispiel 2:

Aus einem Chromstahlband der Abmessung 12,7×0,3 mm und der Zusammensetzung: 0,08 % C, 0,5 % Si, 1,0 % Mn, 17,0 % Cr, Rest Fe und unvermeidliche Verunreinigungen wurde unter Einbringung einer aus 31 % FeSi (45 % Si), 26 % FeCr (70 % Cr), 22 % Ni und 21 % FeMn (80 % Mn) bestehenden Füllung ein Fülldraht hergestellt. Mit diesem Fülldraht (Enddurchmesser: 3,2 mm) wurden unter Schutzgasatmosphäre Auftragschweißungen gebildet. Wie im Falle des Beispieles 1 ergaben auch die damit vorgenommenen Vergleichsuntersuchungen, daß das aus dem Fülldraht gebildete Schweißgut ähnlich gute Vergleichswerte mit dem Schweißgut der Kobaltlegierung hinsichtlich der tribologischen Eigenschaften sowie der IK-Beständigkeit liefert.

**Patentansprüche:**

1. Karbidfreier Zusatzwerkstoff für das Auftragschweißen zur Erzielung eines Schweißgutes mit hoher Abriebfestigkeit sowie hoher Korrosions- und IK-Beständigkeit im nicht wärmebehandelten Zustand, in Form einer ummantelten Stabelektrode oder eines Fülldrahtes bzw. -bandes, dadurch gekennzeichnet, daß erbezogen auf die metallischen Anteile im Kerndraht und der Umhüllung bzw. Füllung — in Gewichtsprozenten
  max. 0,15 % C
  3,0 bis 10,0 % Si
  3,0 bis 12,0 % Mn
  22,0 bis 30,0 % Cr
  7,0 bis 16,0 % Ni
    Rest Fe und unvermeidliche Verunreinigungen enthält.
2. Zusatzwerkstoff nach Anspruch 1, dadurch gekennzeichnet, daß er — bezogen auf die metallischen Anteile im Kerndraht und der Umhüllung bzw. Füllung — in Gewichtsprozenten
  max. 0,15 % C
  4,5 bis 8,5 % Si
  5,0 bis 12,0 % Mn
  22,0 bis 27,0 % Cr
  7,0 bis 14,0 % Ni
    Rest Fe und unvermeidliche Verunreinigungen enthält.

**Claims**

1. Carbide-free filler material for overlay welding for obtaining a weld material having a high abrasive resistance and a high resistance to corrosion and intergranular corrosion in a non heat-treated state, in the form of a covered bar electrode or a filler wire or strip, characterised in that it comprises — in respect of the proportions of metal in the core wire and the coating or filler — in percentage by weight:
  max. 0,15 % C
  3,0 to 10,0 % Si
  3,0 to 12,0 % Mn
  22,0 to 30,0 % Cr
  7,0 to 16,0 % Ni
    the remainder being Fe and unavoidable impurities.
2. Filler material according to claim 1, characterised in that it comprises — in respect of the proportions of metal in the core wire and the coating or filler — in percentage by weight:
  max. 0,15 % C
  4,5 to 8,5 % Si
  5,0 to 12,0 % Mn
  22,0 to 27,0 % Cr
  7,0 to 14,0 % Ni
    the remainder being Fe and unavoidable impurities.

**Revendications**

1. Matériau d'apport exempt de carbures pour les rechargements par soudage, permettant d'obtenir un métal déposé présentant une résistance élevée à l'usure ainsi qu'à la corrosion, en particulier intercristalline à l'état non traité thermiquement, se présentant sous la forme d'une électrodebaquette enrobée ou d'un fil ou ruban-électrode fourré, caractérisé en ce qu'il renferme en pourcentage en poids par rapport aux composants métalliques du fil de noyau et del'enrobage ou du remplissage:
  au maximum 0,15 > de C
  3,0 à 10,0 % de Si
  3,0 à 12,0 % de Mn
  22,0 à 30,0 % de Cr
  7,0 à 16,0 % de Ni
    le reste en Fe avec les impuretés inévitables.
2. Matériau d'apport selon la revendication 1, caractérisé en ce qu'il renferme en pourcentage en poids par rapport aux composants métalliques du fil de noyau et de l'enrobage ou du remplissage:
  au maximum 0,15 % de C
  4,5 à 8,5 % de Si
  5,0 à 12,0 % de Mn
  22,0 à 27,0 % de Cr
  7,0 à 14,0 % de Ni
    le reste en Fe avec les impuretés ineévitables.

£H